**Europäisches Patentamt**

**European Patent Office**

**Office européen des brevets**

(19)

(11) Veröffentlichungsnummer: **0 103 216**
A1

# EUROPÄISCHE PATENTANMELDUNG

(12)

(21) Anmeldenummer: 83108307.6

(22) Anmeldetag: 23.08.83

(51) Int. Cl.³: **G 01 B 3/20**, G 01 B 5/02,
G 01 B 5/08

(30) Priorität: 23.08.82 DE 3231264

(43) Veröffentlichungstag der Anmeldung: 21.03.84
Patentblatt 84/12

(84) Benannte Vertragsstaaten: **AT BE CH DE FR GB IT LI LU
NL SE**

(71) Anmelder: **ELEKTRONIKBAU ULRICH HELLAK,
Siebenlindenstrasse 62, D-7407 Rottenburg (DE)**

(72) Erfinder: **Hellak, Ulrich, Sandäckerstrasse 2,
D-7407 Rottenburg (DE)**
Erfinder: **Posselt, Günther, Amselweg 58,
D-7400 Tübingen 6 (DE)**
Erfinder: **Hasse, Hartmut, D-3513 Lutterberg (DE)**

(74) Vertreter: **Lieck, Hans-Peter, Dipl.-Ing. et al, Lieck &
Betten Patentanwälte Maximliansplatz 10,
D-8000 München 2 (DE)**

(54) **Holzmessvorrichtung.**

(57) Eine ortsbewegliche Meßvorrichtung zur Holzvermessung von Hand umfaßt eine Meßkluppe (1) für die Durchmesser-Messung, an deren verschiebbaren Meßschenkel (7) eine Längen-Meßeinrichtung (2) mit einem ausziehbaren Maßband (16) angebracht ist. Der Meßkluppe (1) und der Längen-Meßeinrichtung (2) sind jeweils eine selbsttätig arbeitende Abtasteinrichtung (3 bzw. 4) zur Erzeugung eines elektrischen Durchmesser- bzw. Längensignales zugeordnet. Die Abstands-Abtasteinrichtung (3) umfaßt ein Wiegand-Band (20) im Inneren des Führungsrohres (5) der Meßkluppe (1) und einen zugeordneten Wiegand-Sensor (21) am beweglichen Meßschenkel (7) der Meßkluppe (1). Die Längen-Abtasteinrichtung (4) umfaßt ein von dem stählernen Maßband (16) umschlungenes Meßrad (25), an welchem das Maßband aufgrund einer axialen magnetischen Polarisierung des Meßrades an seinem Umfang schlupffrei anhaftet. Die der Ausziehbewegung des Maßbandes (16) entsprechende Drehbewegung des Meßrades (25) wird durch einen Winkelschrittgeber erfaßt, der Permanentmagnete (33) am Meßrad (25) und zugeordnete Magnetfeld-Sensoren (34, 35) an dem beweglichen Meßschenkel (7) umfaßt. Die Meßvorrichtung wird an ein übliches Datenerfassungsgerät zur Übernahme der ermittelten Meßwertsignale angeschlossen.

ACTORUM AG

**LIECK BETTEN** 0103216

Patentanwälte
European Patent Attorneys

Dipl.-Ing. H.-Peter Lieck
Dipl.-Ing. Jürgen Betten

Maximiliansplatz 10
D-8000 München 2
☎ 089-22 08 21
Telex 5 216 741 list d
Telegramm Electropat

- 1 -

Holzmeßvorrichtung.

Die Erfindung betrifft eine ortsbewegliche Meßvorrichtung zur Holzvermessung von Hand.

Im Forst- und Sägewerksbereich müssen geschlagene Baumstämme vermessen werden. Man ermittelt ihre Länge sowie ihren Durchmesser am dicken Stammende und in verschiedenen Abständen davon. Für diese Vermessung wird bisher das übliche Maßband zur Längenmessung und die sog. Kluppe zur Durchmessermessung benutzt. Die Meßwerte werden am Maßband bzw. an der Kluppe abgelesen und von Hand in ein Protokollformular übertragen, in dem auch die weiteren Daten des vermessenen Stammes wie Stammnummer, Qualität, Holzart usw. erfaßt werden. Die protokollierten Meßwerte werden später weiter ausgewertet, z.B. durch Eingabe in einen Computer, mit dessen Hilfe die Ausnutzung der Stämme beim Sägen optimiert wird. Die Vermessung der Stämme mittels Kluppe und Maßband und die manuelle Übetragung der Meßwerte in ein Formular sind zeitaufwendig und fehlerbehaftet. Insbesondere bei schlechten Witterungsbedingungen ist das Aufschreiben der Meßwerte im Freien sehr mühsam. Außerdem müssen die aufgezeichneten Meßwerte zur weiteren Verarbeitung nochmals z.B. in einen Computer übertragen werden, was Zeit kostet und die Gefahr des Auftretens weiterer Fehler in sich birgt.

Im Sägewerksbereich sind elektronische, vollautomatische stationäre Meßwerterfassungssysteme für die Stämme bekannt. Diese Systeme erfordern jedoch eine umfangreiche Mechanik und eine aufwendige Elektronik, wodurch sie nur bei Einsatz in sehr großen Betrieben rentabel sein können. Im Forstbereich sind sie naturgemäß gar nicht einsetzbar.

Dementsprechend liegt der Erfindung die Aufgabe zugrunde, eine ortsbewegliche Meßvorrichtung zur Holzvermessung von Hand zu schaffen, mit der sich einander zugeordnete Längen- und Durchmesserwerte von Baumstämmen einfach und bequem ermitteln lassen, ohne daß es notwendig ist, die ermittelten Meßwerte manuell aufzuzeichnen.

Diese Aufgabe ist erfindungsgemäß mit der im Anspruch 1 und bezüglich vorteilhafter Ausgestaltungen in den anschließenden Unteransprüchen gekennzeichneten ortsbeweglichen Meßvorrichtung gelöst.

Bei der erfindungsgemäßen Meßvorrichtung sind eine Durchmesser-Meßeinrichtung und eine Längen-Meßeinrichtung zu einem Instrument zusammengefaßt. Gleichzeitig ist beiden Meßeinrichtungen je eine Abtasteinrichtung zur Erzeugung von elektrischen Signalen zugeordnet, welche den jeweiligen Meßwerten entsprechen. Hierdurch ist ein sehr rasches und fehlerfreies Arbeiten bei der Vermessung von Baumstämmen möglich. Da das Maßband der Längen-Meßeinrichtung an der Durchmesser-Meßeinrichtung bzw. an der Meßkluppe abgewickelt wird, kann in einem einzigen Arbeitsgang, d.h. mit einem einmaligen Ansetzen der Meßkluppe sowohl der Stamm-Durchmesser als auch die Entfernung der Durchmesser-Meßstelle z.B. vom dicken Stammende ermittelt werden. Wenn man das freie Ende des Maßbandes am Stammende einhängt, kann sogar eine Person allein die Messung durchführen. Da die ermittelten Meßwerte mittels der Abtasteinrichtungen automatisch in entsprechende elektrische Signale umgesetzt werden, ist auch keine manuelle Aufzeichnung von Meßwerten mehr notwendig. Die elektrischen Längen- und Durchmessersignale können z.B. gleich am Ort der Messung mittels eines üblichen elektronischen Datenerfassungsgerätes aufgezeichnet werden, das über den Steckverbinder an die Meßvorrichtung angeschlossen ist. Hierbei legt die Bedienungsperson durch Betätigung des Gültigkeits-Tasters an der Meßvorrichtung jeweils diejenigen der jeweiligen Durchmesser- und Längensignale fest, die aufgezeichnet werden sollen. Selbstverständlich muß das elektronische Datenerfassungsgerät nicht zwangsläufig unmittelbar an die Meßvorrichtung angeschlossen sein. Vielmehr können die Meßsignale auch über eine zwischengeschaltete Telemetriestrecke zu einem entfernteren Datenerfassungsgerät übertragen werden. Nicht unbedingt muß das Datenerfassungsgerät "fertige" Meßsignale erhalten. Denkbar ist es auch, daß mindestens Teile der zu den Abtasteinrichtungen gehörenden elektronischen Auswertschaltungen in das Datenerfassungsgerät miteinbezogen sind, so daß erst dort fertige Meßsignale, z.B. durch Zählung oder Auszählung von übertragenen Impulsreihen, entstehen. Die im Datenerfassungsgerät gespeicherten Durchmesser- und Längensignale können nun ohne weitere manuelle Übertragung mittels Computer in beliebiger, vom Anwender festzulegender Weise ausgewertet werden, z.B. zur Ermittlung der geschlagenen Holzmenge, des von der Schlägertruppe verdienten Lohnes oder zur Optimierung der Sägewerksarbeit.

Insgesamt ermöglicht demgemäß die erfindungsgemäße Meßvorrichtung eine rasche und fehlerfreie Holzvermessung sowohl im Forst wie auch im Sägewerk und eine gleichzeitige Aufzeichnung der Meßergebnisse in einer unmittelbar durch Computer weiter verarbeitbaren Form.

Bei der Ausgestaltung der erfindungsgemäßen Meßvorrichtung nach Anspruch 2 werden die jeweiligen Meßwerte auch an der Meßvorrichtung selber angezeigt, was die Durchführung der Messung und die Überprüfung der Meßwerte erleichtert, die durch Betätigung des Gültigkeits-Tasters quittiert und damit im Datenerfassungsgerät gespeichert werden.

Die Ausgestaltung nach Anspruch 3 führt zu einer besonders handlichen Bauform der erfindungsgemäßen Meßvorrichtung, weil alle für die Durchführung der Messung benötigten Organe an der für die Durchmesser-Messung zu verschiebenden und damit sowieso zu handhabenden Führungseinrichtung der Meßkluppe zusammengefaßt sind. Die Ausgestaltung nach Anspruch 3 hat den weiteren Vorteil, daß die signalführenden, elektronischen Teile beider Abtasteinrichtungen in einer einzigen Schaltungsplatine zusammengefaßt sein können, die sich an der Führungseinrichtung befindet. Dies erleichtert die Wartung und die Reparatur der Meßvorrichtung, indem im Falle von Störungen z.B. die Schaltungsplatine einfach insgesamt ausgewechselt wird.

Durch Anwendung einer nach dem an sich bekannten Wiegand-Prinzip arbeitenden Abstands-Abtasteinrichtung gemäß Anspruch 4 wird eine berührungslose, äußerst störungsfreie und sehr hoch auflösende Abtastung des Durchmessers erreicht ohne irgendwelche zusätzliche bewegliche Teile. Das Wiegand-Band besteht aus drahtförmigen bistabilen magnetischen Elementen, die in dem Band parallel zueinander mit gleichem gegenseitigen Längsabstand aneinander gereiht sind und deren Längsabstand die erreichbare Auflösung bestimmt. Der Wiegand-Sensor enthält zwei Permanentmagnete, welche die bistabilen magnetischen Elemente des Bandes beim Vorbeibewegen am Sensor kippen und zurückkippen lassen, sowie
eine Sensorspule, in welcher bei jedem Kippen eines
vorbeibewegten Elementes ein Puls induziert wird, dessen Form je nach Bewegungsrichtung unterschiedlich
ist. Die zweierlei Pulse werden elektronisch gezählt.
Ihre saldierte Anzahl ist ein Maß für den jeweiligen
Abstand zwischen den beiden Meßschenkeln.

Die Längenmessung mittels des Maßbandes ist theoretisch
nur dann genau, wenn sich das Maßband parallel zur
Baumachse erstreckt. Geringe Abweichungen hiervon sind
für die praktisch benötigte Genauigkeit unschädlich. Da
bei der erfindungsgemäßen Meßvorrichtung, wenn keine
besonderen Maßnahmen getroffen werden, das Maßband der
Längen-Meßeinrichtung unmittelbar an einem Meßschenkel
und damit an der Seite des Stammes abläuft, ergibt sich
eine Winkelabweichung des Maßbandes von der Stammachse,
die sich bei großen Durchmessern in Verbindung mit
vergleichsweise kurzen Längen als Fehler der Längenmessung bemerkbar machen kann. Dieser Fehler wird bei der
Weiterbildung der Erfindung gemäß Anspruch 5 in einem
für die Praxis vollkommen ausreichenden Maße vermieden.
Hier läuft das Maßband an einer Stelle von der Meßvorrichtung, die gegenüber dem Meßschenkel, an dem sich
die Längen-Meßeinrichtung befindet, seitlich versetzt
ist und in der Mitte zwischen beiden Meßschenkeln
liegt, wenn diese auf den - statistisch - am häufigsten
vorkommenden Durchmesser-Wert eingestellt sind, so daß
dann das Maßband in der Stammitte verläuft und in den
übrigen Fällen nur eine geringe Winkelabweichung hat.

Eine vollständige Eliminierung des genannten Fehlers
wäre möglich, wenn das Führungsstück für das Maßband
und damit die Ablaufstelle immer in der Mitte zwischen beiden Meßschenkeln gehalten wird, was z.B. durch eine geeignete Getriebe-Verbindung des Führungsstückes mit beiden Meßschenkeln erreicht werden könnte. Untersuchungen haben jedoch gezeigt, daß die mit der Weiterbildung nach Anspruch 5 erreichbare Genauigkeit für alle praktischen Zwecke ausreichend ist.

Für die erfindungsgemäße Meßvorrichtung ist eine Längen-Abtasteinrichtung mit den Merkmalen des Anspruches 6 besonders geeignet. Bei dieser wird der Maßbandweg über das am Maßband schlupffrei abrollende Meßrad in eine proportionale Drehbewegung des Meßrades umgesetzt, die sich mit dem mit dem Meßrad gekoppelten Winkelschrittgeber elektrisch erfassen läßt. Die Schlupffreiheit zwischen Meßrad und Maßband wird auf sehr einfache, jedoch wirksame Weise durch die magnetische Polarisierung des Meßrades erreicht, an welchem das ferromagnetische Maßband deshalb quasi magnetisch anhaftet. Gegenüber anderen Lösungen, z.B. der Verwendungen eines gelochten Maßbandes in Verbindung mit einem gezahnten Meßrad, ist diese Lösung baulich besonders einfach und ermöglicht insbesondere die Verwendung eines handelsüblichen Maßbandes aus Stahl, das eichfähig ist.

Der Winkelschrittgeber der Längen-Abtasteinrichtung ist vorzugsweise gemäß Anspruch 7 ausgestaltet. In dieser Ausgestaltung ist er baulich sehr robust und damit betriebssicher. Seine Justierung ist einfach. Die beiden Magnetfeld-Sensoren, z.B. Hall-Elemente, liefern vergleichsweise große elektrische Signale. Der gegenseitige Versatz der Magnetfeld-Sensoren um etwa ein Viertel des Winkelabstands der Permanentmagnete ermöglicht die Drehrichtungs-Erkennung, so daß, wie bei der Abstands-Abtasteinrichtung, der Maßbandweg durch saldierendes Addieren der in den beiden Drehrichtungen erzeugten Pulse ermittelt werden kann. Der gegenseitige Versatz der Magnetfeld-Sensoren um etwa ein Viertel des Winkelabstandes der Permanentmagnete ist natürlich auch dann eingehalten, wenn die Magnetfeld-Sensoren einen Winkelabstand haben, der diesen Versatz zuzüglich eines ganzzahligen Vielfachen des Winkelabstandes der Permanentmagnete hat bzw. entspricht.

Besonders zweckmäßig ist eine magnetische Polarisierung des Meßrades in axialer Richtung gemäß Anspruch 8, weil hierbei das Maßband nicht ganz flächig am Meßrad, sondern nur mit seinen Längsrändern an zwei überstehenden Radialflanschen des Meßrades anzuliegen braucht, so daß kleine, am Maßband anhaftende Schmutzteilchen keinen Einfluß auf das Abrollen des Meßrades am Maßband und damit auf die Meßgenauigkeit haben können.

Alternativ zu der Längen-Abtasteinrichtung nach den Ansprüchen 6 bis 8 kommt auch eine Abtasteinrichtung nach den Ansprüchen 9 und 10 in Frage, bei der sich die mit Magnetfeld-Sensoren abgetasteten Markierungen in Form von magnetisch polarisierten Zonen unmittelbar in dem Maßband befinden, so daß ein besonderes Meßrad und die Maßnahmen zur Erzielung eines schlupffreien Abrollen des Meßrades am Maßband entfallen können. Auch bei der Alternativausgestaltung ist es ohne weiteres möglich ein eichfähiges, z.B. aus Stahl bestehendes Maßband einzusetzen. Hinsichtlich des gegenseitigen Versatzes der beiden Magnetfeld-Sensoren gilt das oben zu Anspruch 8 Gesagte. Durch die Weiterbildung nach Anspruch 10 werden die von den Sensoren abgegebenen Impulse vergrößert und dadurch die Ansprechsicherheit verbessert.

Beide Längen-Abtasteinrichtungen nach Anspruch 6 und nach Anspruch 9 mit ihren jeweiligen Ausgestaltungen haben auch unabhängig von der ortsbeweglichen Meßvorrichtung zur Holzvermessung, d.h. allein in Verbindung mit einer ein Maßband aufweisenden Längen-Meßeinrichtung erfinderische Bedeutung. Sie ermöglichen die Schaffung einer Längen-Meßeinrichtung mit Maßband, bei welcher das Meßergebnis automatisch in Form eines elektrischen Signales ausgegeben wird.

Im folgenden ist die Erfindung mit weiteren vorteilhaften Einzelheiten anhand einer schematisch dargestellten Ausführungsbeispiels näher erläutert. In den Zeichnungen zeigen:

Figur 1 eine ortsbewegliche Meßvorrichtung zur Holzvermessung von Hand in schematisierter Seitenansicht, wobei das Führungsrohr und die beiden Meßschenkel der Meßvorrichtung nicht in voller Länge, sondern abgebrochen dargestellt sind;

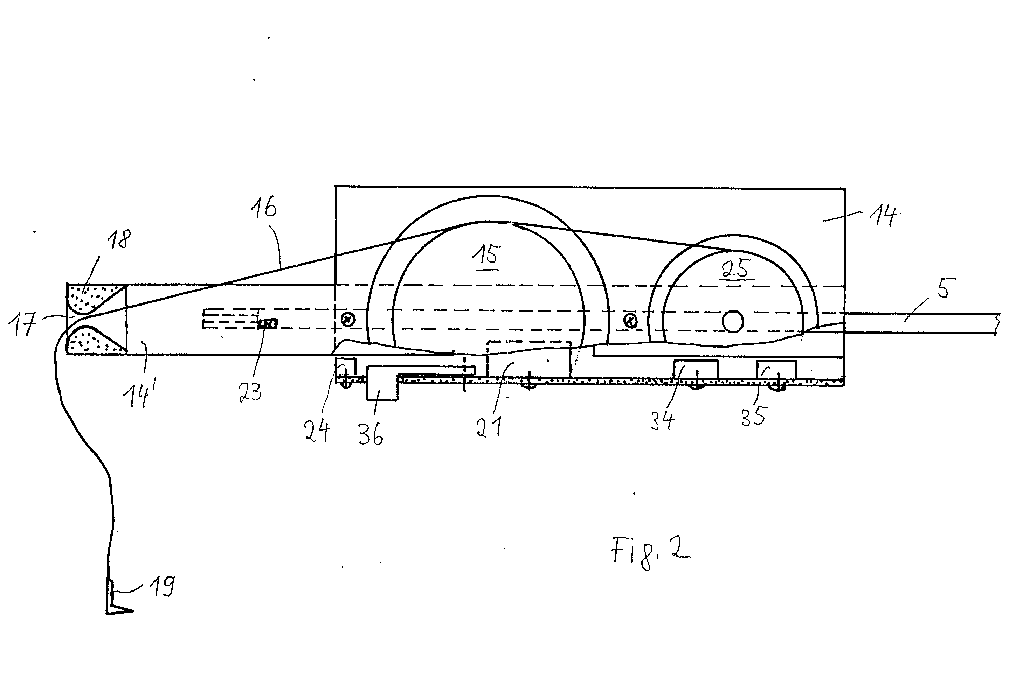

Figur 2 eine Draufsicht zu Figur 1;

Figur 3 eine Stirnansicht zur Figur 1 mit geschnitten gezeigtem Führungsrohr;

Figur 4 eine teilweise geschnitten gezeigte Seitenansicht des Meßrades der Meßvorrichtung nach Figur 1;

Figur 5 eine Draufsicht zur Figur 4;

Figur 6 ein Schemabild zur Erläuterung der Funktion des Meßrades.

Die als Ausführungsbeispiel dargestellte ortsbewegliche Meßvorrichtung zur Holzvermessung von Hand umfaßt eine Durchmesser-Meßeinrichtung in Form einer Meßkluppe 1, eine Längen-Meßeinrichtung 2, eine der Meßkluppe zugeordnete Abstands-Abtasteinrichtung 3 und eine der Längen-Meßeinrichtung zugeordnete Längen-Abtasteinrichtung 4.

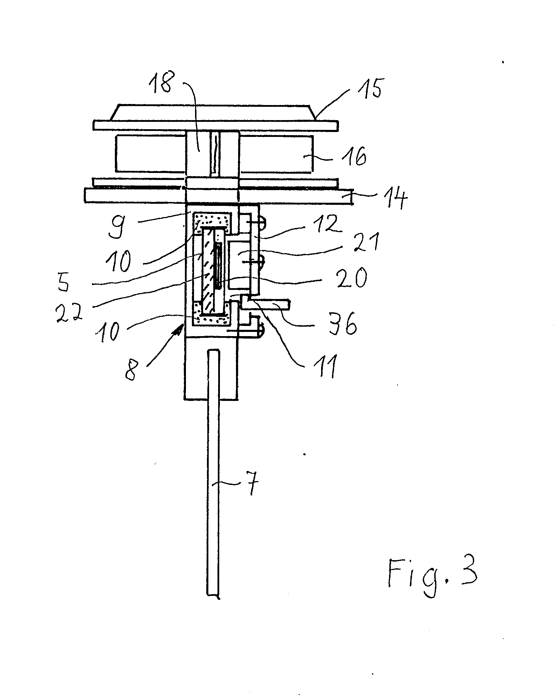

Die Meßkluppe besteht aus einem geraden, im Querschnitt rechteckigen Führungsrohr 5, an dessen einem Ende ein rechtwinklig wegstehender Meßschenkel 6 befestigt ist. Ein zweiter, dazu paralleler Meßschenkel 7 ist an einer Führungseinrichtung 8 angebracht, die auf dem Führungsrohr 5 in Längsrichtung desselben verschiebbar ist. Die Führungseinrichtung 8, vgl. Figur 3, umfaßt ein im Querschnitt rechteckiges Rohrstück 9, welches das Führungsrohr 5 umgibt und durch zwei zwischen das Rohrstück 9 und das Führungsrohr 5 eingefügte Kunststoff-Lagerteile 10 verkippbar, jedoch verschiebbar gehalten ist. Auf einer Flachseite hat das Rohrstück 9 eine in Längsrichtung durchgehende Öffnung 11, die durch eine mit Abstand vorgesetzte, lösbar angebrachte Montageplatte 12 abgedeckt ist.

Die Längen-Meßeinrichtung 2 ist an der Führungseinrichtung 8 angebracht. Hierzu ist auf die obere Schmalseite des Rohrstückes 9 eine Grundplatte 14 aufgesetzt, die auf beiden Seiten über das Rohrstück 9 übersteht und senkrecht zu den Meßschenkeln 6 und 7 ausgerichtet ist. Auf der Grundplatte 14 ist mit zur Grundplatte senkrechter Drehachse eine Maßbandtrommel 15 gelagert, auf der ein aus Stahl bestehendes Maßband 16 aufgewickelt ist. Die Maßbandtrommel 15 steht in nicht näher gezeigter, aber an sich bekannter Weise unter dem Einfluß einer Rückholfeder, welche das Maßband 16 aufgewickelt zu halten sucht. Das freie Ende des Maßbandes 16 ist durch eine Austrittsöffnung 17 in einem Führungsstück 18 geführt und mit einem Spicker 19 versehen, der zum Einhängen in das Holz dient. Das Führungsstück 18 befindet sich am freien Ende einer schmalen Verlängerung 14' der Grundplatte 14, die von der Führungseinrichtung 8 parallel zum Führungsrohr 5 in Richtung des festen Meßschenkels 6 weist und, gerechnet von der Anschlagkante des zweiten, beweglichen Meßschenkels 7 eine Länge hat, die etwa der Hälfte des statistisch am häufigsten zur ermittelnden Durchmesserwertes gleicht, so daß das Maßband 16 am Führungsstück 18 etwa in der Mitte zwischen den beiden Meßschenkeln 6 und 7 austritt, wenn deren Abstand auf den häufigsten Durchmesserwert eingestellt ist. Die Austrittsöffnung 17 ist nach beiden Seiten abgerundet, so daß sich das Maßband in etwa rechtwinklig zur Meßkluppe nach beiden Seiten ohne Behinderung abziehen läßt.

Die der Meßkluppe 1 zugeordnete Abstands-Abtasteinrichtung dient zur Erzeugung eines dem jeweiligen gegenseitigen Abstand der Meßschenkel 6 und 7 entsprechenden elektrischen Durchmessersignales. Die Abstands-Abtasteinrichtung umfaßt ein Wiegand-Band 20, das sich innerhalb des Führungsrohres 5 in ganzer Länge desselben erstreckt, sowie einen zugeordneten Wiegand-Sensor 21, der an der Montageplatte 12 angebracht ist und durch die Öffnung 11 im Rohrstück 9 unmittelbar vor das Führungsrohr 5 reicht, vgl. Figur 3. Das Wiegand-Band 20 ist im Inneren des aus einem magnetischen neutralen Material, z.B. Messing, bestehenden Führungsrohres von einem ebenfalls magnetisch neutralen Träger 22, der z.B. aus Balsaholz besteht, gehalten. Das Wiegand-Band 20 besteht in an sich bekannter Weise aus einer großen Anzahl gleichmäßig voneinander in Längsrichtung des Bandes beanstandeter magnetisch bistabiler Drahtelemente. Der Wiegand-Sensor 21 enthält zwei Permanentmagnete, welche die jeweils passierenden Drahtelemente zum Kippen bzw. Zurückkippen bringen, sowie eine Sensorspule, die bei jedem Kipp- und Rückkippvorgang, also bei jedem Passieren eines bistabilen Drahtelementes, einen Puls abgibt. Dessen Form ist abhängig davon, ob ein Rückkippvorgang auf den Kippvorgang folgt oder umgekehrt, also abhängig von der Richtung der Verschiebung der Führungseinrichtung 8 längs des Führungsrohrs 5. Die vom Wiegand-Sensor 21 abgegebenen Pulse können in bekannter Weise durch richtungsabhängiges Abzählen mittels einer geeigneten Auswertschaltung in das gewünschte Durchmessersignal umgesetzt werden.

Damit die Stellung der Führungseinrichtung 8, in der sich die beiden Meßschenkel 6 und 7 berühren, auch elektronisch eindeutig als Null-Stellung definiert werden kann, ist im Inneren des Führungsrohres 5 am Ende des festen Meßschenkels 6 ein kleiner, die Null-stellung vorgebender Permanentmagnet 21 vorgesehen, der in der Nullstellung einen am Ende der Montageplatte 12 angebrachten magnetischen Sensor 24 für die Nullstellung betätigt.

Die der Längen-Meßeinrichtung 2 zugeordnete Längen-Abtasteinrichtung 4 umfaßt ein Meßrad 25, das neben der Maßbandtrommel 15, parallel zu dieser auf der Grundplatte 14 frei drehbar gelagert ist, und zwar auf der vom Führungsstück 18 abgewandten Seite der Maßbandtrommel 15. Das Maßband 16 ist, ausgehend von der Maßbandtrommel, um das Meßrad geführt und von dort zurück zur anderen Seite der Maßbandtrommel, an der es unter leichter Ablenkung vorbei zum Führungstück 18 läuft. Hierdurch ist das Meßrad 25 über einen Winkel von ca. 180 Grad vom Maßband 16 umschlungen.

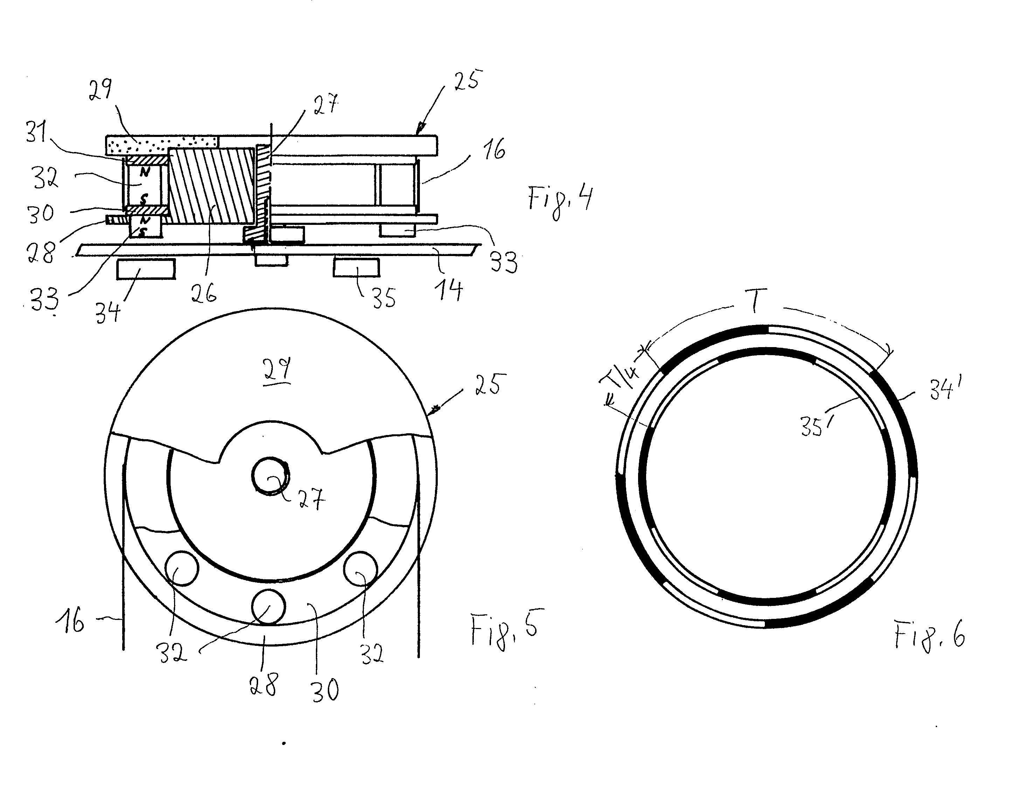

Einzelheiten des Aufbaus des Meßrades 25 sind in den Figuren 4 und 5 gezeigt. Das Meßrad 25 hat die Funktion, die Bewegung des Maßbandes 16 beim Abwickeln von der Maßbandtrommel 15 bzw. beim Zurückwickeln auf dieselbe in eine proportionale Drehbewegung umzusetzen. Hierzu muß das Maßband das Meßrad schlupffrei mitnehmen. Die Schlupffreiheit wird durch eine magnetischen Polarisierung des Meßrades 25 an seinem Umfang erreicht, durch welche das Maßband am Meßrad magnetisch anhaftet. Im einzelnen umfaßt das Meßrad 25 eine Nabe 26, die auf einem von der Grundplatte 14 wegstehenden Lagerzapfen 27 drehbar gelagert ist. An der Nabe 26 ist ein unterer, radialer Führungsflansch 28 ausgebildet. Eine auf die Nabe aufgesetzte Scheibe 29 bildet einen oberen Führungsflansch, der von dem unteren Führungsflansch 28 um etwas mehr als die Breite des Maßbandes beabstandet ist. Die beiden Führungsflansche tragen jeweils auf ihrer einander zugewandten Seite eine Ringscheibe 30 bzw. 31 aus paramagnetischem Material. Der Außendurchmesser der Ringscheiben ist gleich, aber etwas kleiner als derjenige der Führungsflansche. Zwischen den Ringscheiben 30 und 31 sind unter gleichen gegenseitigen Winkelabständen mehrere Permanentmagnete 32 eingefügt, deren magnetische Polarisierung achsparallel, d.h. parallel zum Lagerzapfen 27 und bei sämtlichen Permanentmagneten gleichsinnig ausgerichtet ist. Das Maßband 16 liegt am Außenumfang der Ringscheiben 30 und 31 an und schließt dabei einen über die Permanentmagnete 32, die Ringscheiben 30 und 31 und das Maßband 16 verlaufende Magnetkreis, so daß das Maßband an den Ringscheiben magnetisch "anhaftet". Die Magnetkraft ist hierbei so bemessen, daß einerseits die gewünschte Schlupffreiheit erzielt, andererseits jedoch das Abheben des Maßbandes vom Meßrad nicht behindert ist.

Die Drehung des Meßrades 25 wird von einem mit ihm gekoppelten Winkelschrittgeber in richtungsabhängige Pulse umgesetzt, durch deren richtungsabhängige Auszählung - wie bei der Abstands-Abtasteinrichtung - mittels einer geeigneten Auswertschaltung ein Längensignal gewonnen wird, das der jeweiligen Auszugslänge des Maßbandes 16 entspricht. Der Winkelschrittgeber umfaßt vier mit gleichem gegenseitigen Winkelabstand an der Unterseite des unteren Führungsflansches 28 des Meßrades 25 befestigte Permanentmagnete 33 sowie zwei am oberen Rand der Montageplatte 12 unterhalb des Meßrades 25 befestigte Magnetfeld-Sensoren 34 und 35. Die Magnetfeld-Sensoren, bei denen es sich z.B. um Hall-Elemente handelt, werden von den am Meßrad vorbeiwandernden vier Permanentmagneten 33 abwechselnd ein- und ausgeschaltet. Dies ist schematisch in Figur 6 für die beiden Sensoren durch die geschwärzten und die ungeschwärzten Abschnitte der beiden Kreise 34' und 35' angedeutet. Der gegenseitige Abstand der beiden Sensoren 34 und 35 an der Montageplatte 12 ist so bemessen, daß die Ein- und Ausschalt-Perioden der beiden Sensoren gegeneinander um etwa ein Viertel der Periodedauer T, d.h. um ein Viertel des Winkelabstandes der Permanentmagnete 33 gegeneinander versetzt sind. Dies ermöglicht die gewünschte Richtungserkennung durch Auswertung der Impulse beider Sensoren, weil je nach Drehrichtung des Meßrades entweder der Magnetfeld-Sensor 34 oder der Magnetfeld-Sensor 35 jeweils zuerst anspricht.

Bei der gezeigten Ausführungsform der Meßvorrichtung sind sämtliche Magnetfeld-Sensoren 21, 24 sowie 33 und 34 an der Montageplatte 12 angebracht, was die Justierung und Wartung sehr erleichtert. Außerdem ist am unteren Rand der Montageplatte ein elektrischer Gültigkeits-Taster 36 vorgesehen, der mit einem Finger der Hand, mit welcher die Führungseinrichtung 8 entlang des Führungsrohres 5 verschoben wird, betätigt werden kann. Durch Betätigung des Gültigkeits-Tasters wird ein elektrisches Gültigkeitssignal erzeugt. Schließlich ist an der Montageplatte ein Steckverbinder 37 vorgesehen, über welchen die Meßvorrichtung an ein übliches Datenerfassungsgerät angeschlossen werden kann, zu welchem die ermittelten Längen- und Durchmessersignale zur Speicherung und weiteren Verarbeitung übertragen werden. Hierbei werden durch Betätigung des Gültigkeits-Tasters von den laufend erzeugten Durchmesser- und Längensignale diejenigen ausgewählt, die einer gewollten Messung entsprechen und deshalb gespeichert werden sollen.

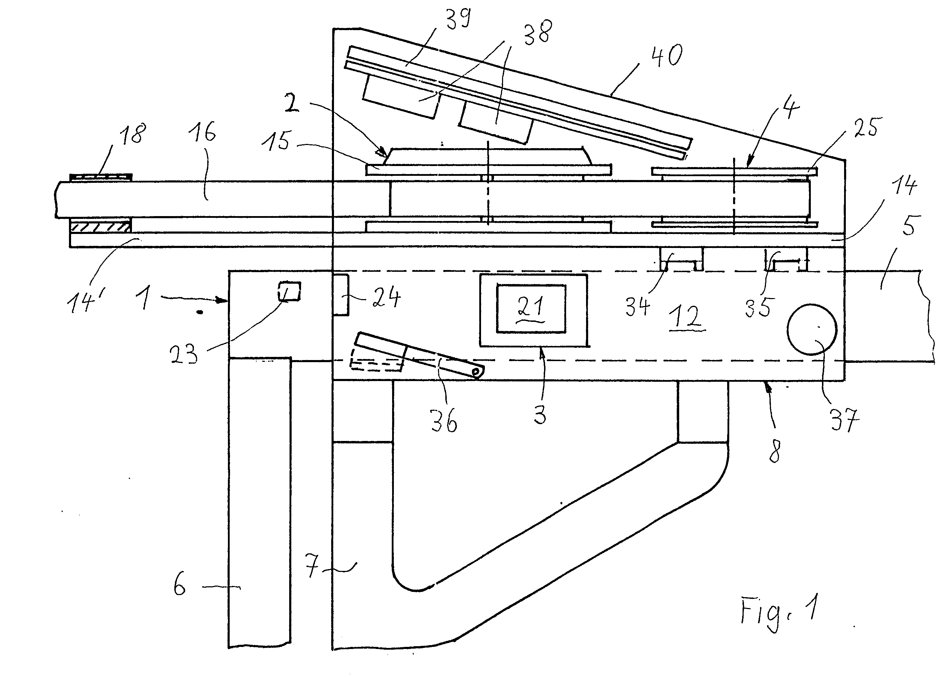

Die den Magnetfeld-Sensoren nachgeschalteten elektrischen Auswerteschaltungen 38 sowie eine Anzeigeeinrichtung 39 für die laufend ermittelten Meßwerte sind innerhalb einer nur in Figur 1 angedeuteten Haube 40 untergebracht, mit welcher die Längen-Meßeinrichtung 2 samt der zugeordneten Längen-Abtasteinrichtung 4 abgedeckt ist.

Bei einer zeichnerisch nicht dargestellten Abwandlung ist das Meßrad 25 durch ein einfaches Umlenkrad für das Maßband ersetzt. Die beiden Magnetfeld-Sensoren 34 und 35 sind auf der Grundplatte 14 so angebracht, daß das Maßband an ihnen vorbeiläuft. Die beiden Sensoren sprechen auf magnetische Zonen an, die in dem Maßband im gleichen gegenseitigen Längsabstand - entsprechend der gewünschten Meßauflösung - ausgebildet sind. vorzugsweise unter Zwischenschaltung jeweils einer in entgegengesetzter Richtung polarisierten magnetischen Zone.

**LIECK   BETTEN**
Patentanwälte
European Patent Attorneys

Dipl.-Ing. H.-Peter Lieck
Dipl.-Ing. Jürgen Betten

Maximiliansplatz 10
D-8000 München 2
☎ 089-22 08 21
Telex 5 216 741 list d
Telegramm Electropat

0103216

- 15 -

A n s p r ü c h e

1.
Ortsbewegliche Meßvorrichtung zur Holzvermessung von
Hand,
gekennzeichnet durch die Kombination folgender Merkmale:

a)
Eine Durchmesser-Meßeinrichtung (1) mit zwei relativ
zueinander linear verschiebbaren Meßschenkeln (6, 7);

b)
Eine an der Durchmesser-Meßeinrichtung (1) angebrachte
Abstands-Abtasteinrichtung (3) zur Erzeugung eines
dem jeweiligen gegenseitigen Abstand der Meßschenkel
(6, 7) entsprechenden elektrischen Durchmessersignales;

c)
Eine an der Durchmesser-Meßeinrichtung (1) angebrachte
Längen-Meßeinrichtung (2) mit einem abwickelbaren Maßband (16);

d)
Eine an der Durchmesser-Meßeinrichtung (1) angebrachte
Längen-Abtasteinrichtung (4) zur Erzeugung eines der
jeweiligen Abwickellänge des Maßbandes (16) entsprechenden elektrischen Längensignales;

e)
Ein an der Durchmesser-Meßeinrichtung (1) angebrachter, manuell betätigbarer elektrischer Taster (36) zur Erzeugung eines elektrischen Gültigkeitssignales; und

f)
Ein an der Durchmesser-Meßeinrichtung (1) angebrachter elektrischer Steckverbinder (37) zum Anschluß der Abtasteinrichtungen (3, 4) und des Tasters (36) an ein elektronisches Datenerfassungsgerät.

2.
Meßvorrichtung nach Anspruch 1,
gekennzeichnet durch
eine an der Durchmesser-Meßeinrichtung (1) angebrachte elektronische Anzeigeeinrichtung (39) für die jeweiligen Werte des Durchmesser- und/oder des Längensignales.

3.
Meßvorrichtung nach Anspruch 1 oder 2,
dadurch gekennzeichnet,
daß die Durchmesser-Meßeinrichtung (1) ein gerades Führungsrohr (5) umfaßt, an dessem einen Ende der eine Meßschenkel (6) fest angebracht ist und an dem eine Führungseinrichtung (8) verschiebbar gelagert ist, welche den zweiten Meßschenkel (7) trägt, und daß die Längen-Meßeinrichtung (2), die Längen-Abtasteinrichtung (4), der signalführende Teil der Abstands-Abtasteinrichtung (3) und der Steckverbinder (37) an der Führungseinrichtung (8) angebracht sind.

4.
Meßvorrichtung nach Anspruch (3),
dadurch gekennzeichnet,
daß die Abstands-Abtasteinrichtung (3) ein im magnetisch neutralen Führungsrohr (5) vorgesehenes Wiegand-Band (20) und einen zugeordneten Wiegand-Sensor (21) an der Führungseinrichtung (8) umfaßt.

5.

Meßvorrichtung nach Anspruch 3 oder 4, dadurch gekennzeichnet, daß die Längen-Meßeinrichtung (2) ein Führungsstück (18) mit einer Austrittsöffnung (17) für das Maßband (16) umfaßt, welches an der Führungseinrichtung (8) in der Ebene der beiden Meßschenkel (6, 7) und auf der Seite des ersten, festen Meßschenkels (6) in einem Abstand vom zweiten Meßschenkel (7) angebracht ist, welcher der Hälfte des am häufigsten zu ermittelnden Durchmesserwertes gleicht.

6.

Längen-Meßeinrichtung, insbesondere für eine Meßvorrichtung nach einem der Ansprüche 1 bis 5, mit einem vorzugsweise unter Überwindung einer Rückholkraft abwickelbaren Maßband (16), dadurch gekennzeichnet, daß eine Längen-Abtasteinrichtung (4) zur Erzeugung eines der jeweiligen Abwickellänge des Maßbandes (16) entsprechenden elektrischen Längensignales ein vom Maßband (16) teil-umschlungenes, an diesem schlupffrei abrollendes Meßrad (25) umfaßt, mit dem ein richtungsabhängig arbeitender Winkelschrittgeber (33, 34, 35) gekoppelt ist, und daß das Meßrad (25) am Umfang magnetisch polarisiert ist, wobei das Maßband (16) aus ferromagnetischem Material besteht.

7.

Längen-Meßeinrichtung nach Anspruch 6, dadurch gekennzeichnet,

daß der Winkelschrittgeber mehrere, am Meßrad (25) mit gleichem gegenseitigen Winkelabstand angebrachte Permanentmagnete (33) und in Zuordnung zu diesen zwei ortsfeste Magnetfeld-Sensoren (34, 35) umfaßt, die in Umfangsrichtung des Meßrades (25) um etwa ein Viertel des Winkelabstandes der Permanentmagnete (33) zu einander versetzt angeordnet sind.

8.
Längen-Meßeinrichtung nach Anspruch 6 oder 7,
dadurch gekennzeichnet,
daß das Meßrad (25) am Umfang in axialer Richtung magnetisch polarisiert ist.

9.
Längen-Meßeinrichtung, insbesondere für eine Meßvorrichtung nach einem der Ansprüche 1 bis 6, mit einem vorzugsweise unter Überwindung einer Rückholkraft abwickelbaren Maßband (16),
dadurch gekennzeichnet,
daß eine Längen-Abtasteinrichtung (4) zur Erzeugung eines der jeweiligen Abwickellänge des Maßbandes (16) entsprechenden elektrischen Längensignales gleichmäßig beabstandete, magnetisch polarisierte Zonen in dem Maßband (16) und in Zuordnung zu diesen zwei ortsfeste Magnetfeld-Ssensoren (34, 35) umfaßt, die in Längsrichtung des Maßbandes (16) um ein Viertel des Längsabstandes der magnetischen Zonen zueinander versetzt angeordnet sind.

10.
Längen-Meßeinrichtung nach Anspruch 9,
dadurch gekennzeichnet,
daß sich zwischen den magnetisch polarisierten Zonen in dem Maßband (16) jeweils eine in entgegengesetzter Richtung magnetisch polarisierte Zone befindet.

0103216

Fig. 1

Fig. 2

Fig. 3

29

31

32

30

28

33.

34

27

25

16

Fig. 4

26

35

14

33

29

25

27

16

32

28

30

32

Fig. 5

T

T/4

34'

35'

Fig. 6

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 834 519  (G. TRAUTMANN et al.)<br>* Ansprüche 1, 6 *<br>--- | 1 | G 01 B  3/20<br>G 01 B  5/02<br>G 01 B  5/08 |
| A | DE-A-2 445 578  (K. VISA et al.)<br>* Ansprüche *<br>--- | 1 | |
| A | DE-A-3 026 906  (F. AMSCHLER)<br>* Figur 1; Anspruch 1 *<br>--- | 1 | |
| A | DE-C- 829 803  (E. BUTZEK)<br>* Anspruch 1 *<br><br>----- | 1 | |
| | | | **RECHERCHIERTE SACHGEBIETE (Int. Cl. ³)**<br><br>G 01 B  3/00<br>G 01 B  5/00<br>G 01 B  7/02 |

Der vorliegende Recherchenbericht wurde für alle Patentansprüche erstellt.

| Recherchenort | Abschlußdatum der Recherche | Prüfer |
|---|---|---|
| BERLIN | 22-11-1983 | KOEHN G |